# EUROPEAN PATENT APPLICATION

(11) **EP 4 694 341 A1**
(43) Date of publication of application: **11.02.2026**
(21) Application number: 24806456.0
(22) Date of filing: 10.05.2024
(51) Int. Cl.: H04W 36/00

(54) **COMMUNICATION METHOD, APPARATUS AND SYSTEM, AND STORAGE MEDIUM**

(30) Priority: 12.05.2023 CN 202310541250
(71) Applicant: Huawei Technologies Co., Ltd., Shenzhen, Guangdong 518129 (CN)
(72) Inventor: WANG, Dan, Shenzhen, Guangdong 518129 (CN); ZHOU, Han, Shenzhen, Guangdong 518129 (CN); WEI, Xinpeng, Shenzhen, Guangdong 518129 (CN)
(74) Representative: MERH-IP Matias Erny Reichl Hoffmann Patentanwälte PartG mbB
(86) International application number: PCT/CN2024/092144
(87) International publication number: WO 2024/235104

(57) **Abstract**

This application discloses a communication method, apparatus, and system, and a storage medium. If a first access network device determines that switching occurs, the first access network device sends network status information. This improves timeliness of reporting the network status information.

## Description

This application claims priority to Chinese Patent Application No. 202310541250.5, filed with the China National Intellectual Property Administration on May 12, 2023 and entitled "COMMUNICATION METHOD, APPARATUS, AND SYSTEM, AND STORAGE MEDIUM", which is incorporated herein by reference in its entirety.

### TECHNICAL FIELD

This application relates to the field of communication technologies, and in particular, to a communication method, apparatus, and system, and a storage medium.

### BACKGROUND

When network congestion occurs, after receiving congestion information, an application function (application function, AF) network element adjusts a rate, to relieve the congestion as much as possible. However, when network switching occurs and a target base station is no longer congested, if the AF cannot be notified in time of information indicating that the target base station is no longer congested, the AF still performs rate adjustment based on a congestion status, and user experience may be degraded.

### SUMMARY

This application provides a communication method, apparatus, and system, and a storage medium, to notify an AF of a congestion status of a network in time.

According to a first aspect, a communication method is provided. The method may be performed by a first access network device, or may be performed by a module (for example, a processor, a chip, or a chip system) used in a first access network device, or may be implemented by a logical node, a logical module, or software that can implement all or some functions of a first access network device.

The method includes: The first access network device determines that switching occurs, where that switching occurs is that switching from a second access network device to the first access network device is performed; and the first access network device sends network status information.

According to the method, if the first access network device determines that switching occurs, the first access network device sends the network status information. This improves timeliness of reporting the network status information.

In a possible implementation, the network status information indicates at least one of the following: a network congestion degree, whether network congestion occurs, or congestion information.

In this implementation, the network status information is explicitly indicated, so that an AF can accurately obtain the network status information.

In another possible implementation, the network status information is used to trigger determining of a transmission policy based on the network status information.

In this implementation, if the first access network device determines that switching occurs, the first access network device sends the network status information to the AF, and the AF may determine an appropriate transmission policy based on the network status information. This improves timeliness of reporting the network status information, and improves timeliness of adjusting the transmission policy by the AF.

In another possible implementation, the transmission policy includes a transmission rate, and the network status information is used to trigger the application function network element to adjust the transmission rate based on the network status information.

In this implementation, the network status information is sent, so that the AF can increase the transmission rate when a network is not congested, to improve user experience. When the network is congested, the AF decreases the transmission rate to reduce a packet loss rate.

In another possible implementation, that the first access network device sends the network status information includes: The first access network device sends the network status information when switching starts, during switching, or after switching is completed.

In this implementation, when switching starts, during switching, or after switching is completed, the first access network device sends the network status information, to trigger determining of the transmission policy based on the network status information. This improves timeliness of reporting the network status information, so that an appropriate transmission policy can be determined based on the network status information.

In another possible implementation, that the first access network device sends the network status information during switching includes: The first access network device receives an N3 interface end marker, and sends the network status information; or the first access network device receives a switching request, and sends the network status information.

According to a second aspect, a communication method is provided. The method may be performed by an access network device, or may be performed by a module (for example, a processor, a chip, or a chip system) used in an access network device, or may be implemented by a logical node, a logical module, or software that can implement all or some functions of an access network device.

The method includes: The access network device receives configuration information, where the configuration information indicates to immediately report network status information or report network status information when a change of an air interface status meets a condition; and the access network device sends the network status information based on the configuration information.

According to the method, after receiving the configuration information, the access network device immediately reports the network status information or reports the network status information when the change of the air interface status meets the condition, so that the access network device can report the network status information to an AF in time. This improves timeliness of reporting the network status information. In this way, the AF can determine an appropriate transmission policy based on the network status information.

In a possible implementation, the network status information indicates at least one of the following: a network congestion degree, whether network congestion occurs, or congestion information.

In this implementation, the network status information is explicitly indicated, so that the AF accurately obtains the network status information.

In another possible implementation, the network status information is used to trigger determining of the transmission policy based on the network status information.

In this implementation, the AF determines the transmission policy based on the network status information, so that the AF can increase a transmission rate when a network is not congested, to improve user experience. When the network is congested, the AF decreases the transmission rate to reduce a packet loss rate. In another possible implementation, the transmission policy includes the transmission rate, and the network status information is used to trigger the application function network element to adjust the transmission rate based on the network status information.

In this implementation, the network status information is transmitted to the AF, so that the AF can increase the transmission rate when the network is not congested, to improve user experience. When the network is congested, the AF decreases the transmission rate to reduce the packet loss rate.

In another possible implementation, that the configuration information indicates to immediately report the network status information includes: The configuration information includes configuration information of quality of service monitoring indicating to immediately report the network status information; or the configuration information of the quality of service monitoring includes a congestion information parameter indicating to immediately report the network status information; or the configuration information includes the configuration information of quality of service monitoring indicating to report the network status information once switching occurs; or an event-triggered report in the configuration information of the quality of service monitoring includes a switching event indicating to report the network status information once switching occurs.

In this implementation, the configuration information may indicate to immediately report the network status information, so that the access network device can report the network status information to the AF in time. This improves timeliness of reporting the network status information.

In another possible implementation, the configuration information includes a first threshold, and that the configuration information indicates to report the network status information when the change of the air interface status meets the condition includes: The configuration information indicates to report the network status information when a difference between the to-be-reported network status information and previously reported network status information is greater than or equal to the first threshold.

In this implementation, the configuration information includes the first threshold, so that the access network device can report the network status information to the AF in time when the change of the network status information exceeds the first threshold. This improves timeliness of reporting the network status information.

In another possible implementation, that the access network device sends the network status information based on the configuration information includes: The access network device sends the network status information based on the configuration information after determining that switching occurs.

In another possible implementation, that the access network device determines that switching occurs includes: The access network device receives an N3 interface end marker, and determines that switching occurs; or the access network device receives a switching request, and determines that switching occurs.

In another possible implementation, that the access network device sends the network status information based on the configuration information includes: The access network device encapsulates the network status information in a general packet radio service tunneling protocol for a user plane (GPRS tunneling protocol, GTP-U) header; and the access network device sends information including the GTP-U header to a user plane function network element, so that the user plane function network element sends the information including the GTP-U header to the application function network element through at least one of a session management function network element, a policy control function network element, and a network exposure function entity.

According to a third aspect, a communication method is provided. The method may be performed by a session management function (session management function, SMF) network element, or may be performed by a module (for example, a processor, a chip, or a chip system) used in an SMF, or may be implemented by a logical node, a logical module, or software that can implement all or some functions of an SMF.

The method includes: The session management function network element sends configuration information, where the configuration information indicates a target access network device to immediately report network status information when switching occurs or report network status information when a change of an air interface status meets a condition.

In a possible implementation, the method further includes: The session management function network element receives the configuration information from a policy control function network element.

In another possible implementation, the configuration information is an immediate reporting indication; or the configuration information is an immediate reporting indication for quality of service monitoring.

In another possible implementation, the network status information indicates at least one of the following: a network congestion degree, whether network congestion occurs, or congestion information.

In another possible implementation, the network status information is used to trigger determining of a transmission policy based on the network status information.

According to a fourth aspect, a communication method is provided. The method may be performed by a policy control function (policy control function, PCF) network element, or may be performed by a module (for example, a processor, a chip, or a chip system) used in a PCF, or may be implemented by a logical node, a logical module, or software that can implement all or some functions of a PCF.

The method includes: The policy control function network element generates configuration information, where the configuration information indicates to immediately report network status information or report network status information when a change of an air interface status meets a condition; and the policy control function network element sends the configuration information.

According to the method, the PCF indicates, in the configuration information, to immediately report the network status information or report the network status information when the change of the air interface status meets the condition, so that an access network device can report the network status information to an AF in time. This improves timeliness of reporting the network status information.

In a possible implementation, the configuration information is included in a policy and charging control (policy and charging control, PCC) rule; or the configuration information is included in a quality of service monitoring configuration in the PCC rule.

In another possible implementation, that the policy control function network element sends the configuration information includes: The policy control function network element sends the configuration information to a session management function network element, so that the session management function network element sends the configuration information to the access network device through an access and mobility management function (access and mobility management function, AMF) network element.

In another possible implementation, the network status information indicates at least one of the following: a network congestion degree, whether network congestion occurs, or congestion information.

In another possible implementation, the network status information is used to trigger determining of a transmission policy based on the network status information.

In another possible implementation, the transmission policy includes a transmission rate, and the network status information is used to trigger an application function network element to adjust the transmission rate based on the network status information.

In another possible implementation, that the configuration information indicates to immediately report the network status information includes: The configuration information includes configuration information of quality of service monitoring indicating to immediately report the network status information; or the configuration information of the quality of service monitoring includes a congestion information parameter indicating to immediately report the network status information; or the configuration information includes the configuration information of quality of service monitoring indicating to report the network status information once switching occurs; or an event-triggered report in the configuration information of the quality of service monitoring includes a switching event indicating to report the network status information once switching occurs.

In another possible implementation, the configuration information includes a first threshold, and that the configuration information indicates to report the network status information when the change of the air interface status meets the condition includes: The configuration information indicates to report the network status information when a difference between the to-be-reported network status information and previously reported network status information is greater than or equal to the first threshold.

According to a fifth aspect, a communication method is provided. The method may be performed by a first network element, or may be performed by a module (for example, a processor, a chip, or a chip system) used in a first network element, or may be implemented by a logical node, a logical module, or software that can implement all or some functions of a first network element. For example, the first network element may be a user plane function (user plane function, UPF) network element or an SMF.

The method includes: The first network element determines that a network status information reporting condition is met; and the first network element sends network status information to a second network element, where the network status information indicates that a network is no longer congested.

According to the method, when determining that the network status information reporting condition is met, the first network element sends the network status information to the second network element, where the network status information indicates that the network is no longer congested. In this way, the second network element can determine a transmission policy in time based on the network status information. This improves timeliness of reporting a congestion status.

In a possible implementation, the network status information indicates a network congestion status, and the network congestion status includes at least one of the following: the network is no longer congested, a network congestion percentage is 0%, and the network congestion percentage is less than or equal to a first threshold; or the network status information is a data packet, and the data packet does not include a congestion marker.

In another possible implementation, the network status information reporting condition includes at least one of the following: The first network element generates an N3 interface end marker, and sends the network status information; the first network element receives an N3 interface end marker, and sends the network status information; and the first network element sends the N3 interface end marker to a source base station, and sends the network status information. The N3 interface end marker indicates to no longer send data to a source access network device.

In another possible implementation, that the first network element sends the network status information to the second network element includes: The first network element sends the network status information to the second network element through at least one of a session management function network element, a policy control function network element, and a network exposure function entity; or the first network element sends the network status information to the second network element through the policy control function network element and/or the network exposure function entity.

In another possible implementation, before the first network element sends the network status information to the second network element, the method further includes: The first network element receives indication information from a third network element, where the indication information indicates the network congestion status.

According to a sixth aspect, a communication method is provided. The method may be performed by a second network element, or may be performed by a module (for example, a processor, a chip, or a chip system) used in a second network element, or may be implemented by a logical node, a logical module, or software that can implement all or some functions of a second network element. For example, the second network element may be an AF.

The method includes: The second network element receives network status information from a first network element, where the network status information indicates that a network is no longer congested; and the second network element determines a transmission policy based on the network status information.

In a possible implementation, the transmission policy includes a transmission rate, and that the second network element determines the transmission policy based on the network status information includes: The second network element adjusts the transmission rate based on the network status information.

According to a seventh aspect, a communication method is provided. The method may be performed by a terminal, or may be performed by a module (for example, a processor, a chip, or a chip system) used in a terminal, or may be implemented by a logical node, a logical module, or software that can implement all or some functions of a terminal.

The method includes: The terminal obtains network status information; and the terminal sends the network status information to a first network element, where the network status information indicates at least one of the following: a network congestion degree, whether network congestion occurs, or congestion information.

According to the method, the terminal obtains the network status information, and sends the network status information to the first network element, so that the first network element can determine a transmission policy in time based on the received network status information. This improves timeliness of reporting a congestion status.

In a possible implementation, that the terminal sends the network status information to the first network element includes: The terminal sends the network status information to the first network element according to an upper-layer protocol; or the terminal sends the network status information to a second network element, so that the second network element forwards the network status information to the first network element through at least one of an SMF, a PCF, and a NEF.

According to an eighth aspect, a communication method is provided. The method may be performed by a first network element, or may be performed by a module (for example, a processor, a chip, or a chip system) used in a first network element, or may be implemented by a logical node, a logical module, or software that can implement all or some functions of a first network element. For example, the first network element may be an AF.

The method includes: The first network element receives network status information from a terminal; and the first network element determines a transmission policy based on the network status information, where the network status information indicates at least one of the following: a network congestion degree, whether network congestion occurs, or congestion information.

In a possible implementation, the transmission policy includes a transmission rate, and the first network element adjusts the transmission rate based on the network status information.

According to a ninth aspect, a communication apparatus is provided. The communication apparatus may implement the method in the first aspect. The apparatus may be an access network device, or may be a module (for example, a processor, a chip, or a chip system) used in an access network device, or may be a logical node, a logical module, or software that can implement all or some functions of an access network device.

In a possible implementation, the apparatus includes an interface unit and a processing unit. The processing unit is configured to determine that switching occurs, where that switching occurs is that switching from a second access network device to the first access network device is performed. In addition, the interface unit is configured to send network status information.

Optionally, the network status information indicates at least one of the following: a network congestion degree, whether network congestion occurs, or congestion information.

Optionally, the network status information is used to trigger determining of a transmission policy based on the network status information. Optionally, the transmission policy includes a transmission rate, and the network status information is used to trigger an application function network element to adjust the transmission rate based on the network status information.

Optionally, the interface unit is configured to send the network status information during switching or after switching is completed.

Optionally, the interface unit is configured to: receive an N3 interface end marker, and send the network status information; or receive a switching request, and send the network status information; or send the network status information after switching is completed.

According to a tenth aspect, a communication apparatus is provided. The communication apparatus may implement the method in the second aspect. The apparatus may be an access network device, or may be a module (for example, a processor, a chip, or a chip system) used in an access network device, or may be a logical node, a logical module, or software that can implement all or some functions of an access network device.

In a possible implementation, the apparatus includes an interface unit and a processing unit. The interface unit is configured to receive configuration information, where the configuration information indicates to immediately report network status information or report network status information when a change of an air interface status meets a condition. In addition, the interface unit is further configured to send the network status information based on the configuration information.

Optionally, the network status information indicates at least one of the following: a network congestion degree, whether network congestion occurs, or congestion information.

Optionally, the network status information is used to trigger determining of a transmission policy based on the network status information.

Optionally, the transmission policy includes a transmission rate, and the network status information is used to trigger an application function network element to adjust the transmission rate based on the network status information.

Optionally, that the configuration information indicates to immediately report the network status information includes: The configuration information includes configuration information of quality of service monitoring indicating to immediately report the network status information; or the configuration information of the quality of service monitoring includes a congestion information parameter indicating to immediately report the network status information; or the configuration information includes the configuration information of quality of service monitoring indicating to report the network status information once switching occurs; or an event-triggered report in the configuration information of the quality of service monitoring includes a switching event indicating to report the network status information once switching occurs.

Optionally, the configuration information includes a first threshold, and that the configuration information indicates to report the network status information when the change of the air interface status meets the condition includes: The configuration information indicates to report the network status information when a difference between the to-be-reported network status information and previously reported network status information is greater than or equal to the first threshold.

Optionally, the interface unit is further configured to: after the processing unit determines that switching occurs, send the network status information based on the configuration information.

Optionally, the processing unit is further configured to: when the interface unit receives an N3 interface end marker, determine that switching occurs; or the processing unit is further configured to: when the interface unit receives a switching request, determine that switching occurs.

Optionally, the processing unit is further configured to encapsulate the network status information in a GTP-U header for a user plane; and the interface unit is further configured to send information including the GTP-U header to a user plane function network element, so that the user plane function network element sends the information including the GTP-U header to an application function network element through at least one of a session management function network element, a policy control function network element, and a network exposure function entity.

According to an eleventh aspect, a communication apparatus is provided. The communication apparatus may implement the method in the third aspect. The apparatus may be an SMF, or may be a module (for example, a processor, a chip, or a chip system) used in an SMF, or may be a logical node, a logical module, or software that can implement all or some functions of an SMF.

In a possible implementation, the apparatus includes an interface unit and a processing unit. The interface unit is configured to send configuration information, where the configuration information indicates a target access network device to immediately report network status information when switching occurs or report network status information when a change of an air interface status meets a condition.

Optionally, the interface unit is further configured to receive the configuration information from a policy control function network element.

Optionally, the configuration information is an immediate reporting indication; or the configuration information is an immediate reporting indication for quality of service monitoring.

Optionally, the network status information indicates at least one of the following: a network congestion degree, whether network congestion occurs, or congestion information.

Optionally, the network status information is used to trigger determining of a transmission policy based on the network status information.

According to a twelfth aspect, a communication apparatus is provided. The communication apparatus may implement the method in the fourth aspect. The apparatus may be a PCF, or may be a module (for example, a processor, a chip, or a chip system) used in a PCF, or may be a logical node, a logical module, or software that can implement all or some functions of a PCF.

In a possible implementation, the apparatus includes an interface unit and a processing unit. The processing unit is configured to generate configuration information, where the configuration information indicates to immediately report network status information or report network status information when a change of an air interface status meets a condition. In addition, the interface unit is configured to send the configuration information.

Optionally, the configuration information is included in a PCC rule; or the configuration information is included in a quality of service monitoring configuration in the PCC rule.

Optionally, the interface unit is further configured to send the configuration information to a session management function network element, so that the session management function network element sends the configuration information to an access network device through an AMF.

Optionally, the network status information indicates at least one of the following: a network congestion degree, whether network congestion occurs, or congestion information.

Optionally, the network status information is used to trigger determining of a transmission policy based on the network status information.

Optionally, the transmission policy includes a transmission rate, and the network status information is used to trigger an application function network element to adjust the transmission rate based on the network status information.

Optionally, that the configuration information indicates to immediately report the network status information includes: The configuration information includes configuration information of quality of service monitoring indicating to immediately report the network status information; or the configuration information of the quality of service monitoring includes a congestion information parameter indicating to immediately report the network status information; or the configuration information includes the configuration information of quality of service monitoring indicating to report the network status information once switching occurs; or an event-triggered report in the configuration information of the quality of service monitoring includes a switching event indicating to report the network status information once switching occurs.

Optionally, the configuration information includes a first threshold, and that the configuration information indicates to report the network status information when the change of the air interface status meets the condition includes: The configuration information indicates to report the network status information when a difference between the to-be-reported network status information and previously reported network status information is greater than or equal to the first threshold.

According to a thirteenth aspect, a communication apparatus is provided. The communication apparatus may implement the method in the fifth aspect. The apparatus may be a first network element, or may be a module (for example, a processor, a chip, or a chip system) used in a first network element, or may be a logical node, a logical module, or software that can implement all or some functions of a first network element. For example, the first network element may be a UPF or an SMF.

In a possible implementation, the apparatus includes an interface unit and a processing unit. The processing unit is configured to determine that a network status information reporting condition is met; and the interface unit is configured to send network status information to a second network element, where the network status information indicates that a network is no longer congested.

Optionally, the network status information indicates a network congestion status, and the network congestion status includes at least one of the following: the network is no longer congested, a network congestion percentage is 0%, and the network congestion percentage is less than or equal to a first threshold; or the network status information is a data packet, and the data packet does not include a congestion marker.

Optionally, the network status information reporting condition includes at least one of the following: The processing unit generates an N3 interface end marker, and sends the network status information; the interface unit receives the N3 interface end marker, and sends the network status information; and the interface unit sends the N3 interface end marker to a source base station, and sends the network status information. The N3 interface end marker indicates to no longer send data to a source access network device.

Optionally, the interface unit is further configured to send the network status information to the second network element through at least one of a session management function network element, a policy control function network element, and a network exposure function entity; or the interface unit is further configured to send the network status information to the second network element through the policy control function network element and/or the network exposure function entity.

Optionally, the interface unit is further configured to receive indication information from a third network element, where the indication information indicates the network congestion status.

According to a fourteenth aspect, a communication apparatus is provided. The communication apparatus may implement the method in the sixth aspect. The apparatus may be a second network element, or may be a module (for example, a processor, a chip, or a chip system) used in a second network element, or may be a logical node, a logical module, or software that can implement all or some functions of a second network element. For example, the second network element may be an AF.

In a possible implementation, the apparatus includes an interface unit and a processing unit. The interface unit is configured to receive network status information from a first network element, where the network status information indicates that a network is no longer congested; and the processing unit is configured to determine a transmission policy based on the network status information.

Optionally, the transmission policy includes a transmission rate, and the processing unit is configured to adjust the transmission rate based on the network status information.

According to a fifteenth aspect, a communication apparatus is provided. The communication apparatus may implement the method in the seventh aspect. The apparatus may be a terminal, or may be a module (for example, a processor, a chip, or a chip system) used in a terminal, or may be a logical node, a logical module, or software that can implement all or some functions of a terminal.

In a possible implementation, the apparatus includes an interface unit and a processing unit. The processing unit is configured to obtain network status information; and the interface unit is configured to send the network status information to a first network element, where the network status information indicates at least one of the following: a network congestion degree, whether network congestion occurs, or congestion information.

Optionally, the interface unit is configured to send the network status information to the first network element according to an upper-layer protocol; or the interface unit is configured to send the network status information to a second network element, so that the second network element forwards the network status information to the first network element through at least one of an SMF, a PCF, and a NEF.

According to a sixteenth aspect, a communication apparatus is provided. The communication apparatus may implement the method in the eighth aspect. The apparatus may be an AF, or may be a module (for example, a processor, a chip, or a chip system) used in an AF, or may be a logical node, a logical module, or software that can implement all or some functions of an AF.

In a possible implementation, the apparatus includes an interface unit and a processing unit. The interface unit is configured to receive network status information from a terminal; and the processing unit is configured to determine a transmission policy based on the network status information, where the network status information indicates at least one of the following: a network congestion degree, whether network congestion occurs, or congestion information.

Optionally, the transmission policy includes a transmission rate, and the processing unit is configured to adjust the transmission rate based on the network status information.

With reference to the tenth aspect to the sixteenth aspect, in another possible implementation, the communication apparatus includes a processor coupled to a memory. The processor is configured to support the apparatus in performing a corresponding function in the foregoing communication method. The memory is configured to be coupled to the processor, and the memory stores a computer program (or computer-executable instructions) and/or data required for the apparatus. For example, the communication apparatus may further include a communication interface, configured to support communication between the apparatus and another network element, for example, sending or receiving of data and/or a signal. For example, the communication interface may be a transceiver, a circuit, a bus, a module, or another type of communication interface. For example, the memory may be located inside the communication apparatus and integrated with the processor, or may be located outside the communication apparatus.

With reference to the tenth aspect to the sixteenth aspect, in another possible implementation, the communication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, an interface circuit, a communication interface, or an input/output interface, and is configured to receive a signal from another communication apparatus other than the communication apparatus and transmit the signal to the processor, or send a signal from the processor to another communication apparatus other than the communication apparatus. When the communication apparatus is a chip, the transceiver apparatus is a transceiver circuit or an input/output interface.

When the communication apparatus is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a seventeenth aspect, a communication system is provided. The communication system includes the communication apparatus according to the tenth aspect to the communication apparatus according to the twelfth aspect.

According to an eighteenth aspect, a communication system is provided. The communication system includes the communication apparatus according to the thirteenth aspect and the communication apparatus according to the fourteenth aspect.

According to a nineteenth aspect, a communication system is provided. The communication system includes the communication apparatus according to the fifteenth aspect and the communication apparatus according to the sixteenth aspect.

According to a twentieth aspect, a computer-readable storage medium is provided. The computer-readable storage medium stores a computer program or instructions. When the program or the instructions are executed by a processor, the method according to any one of the first aspect to the eighth aspect or the implementations of the first aspect to the eighth aspect is performed.

According to a twenty-first aspect, a computer program is provided. When the computer program is executed on a computer, the method according to any one of the first aspect to the eighth aspect or the implementations of the first aspect to the eighth aspect is performed.

According to a twenty-second aspect, a computer program product is provided. When the computer program product is executed on a computing device, the method according to any one of the first aspect to the eighth aspect or the implementations of the first aspect to the eighth aspect is performed.

According to a twenty-third aspect, a circuit is provided. The circuit is coupled to a memory, and the circuit is configured to perform the method according to any one of the first aspect to the eighth aspect or the implementations of the first aspect to the eighth aspect. The circuit may include a chip circuit.

### BRIEF DESCRIPTION OF DRAWINGS

FIG. 1 is a simplified diagram of a wireless communication system according to an embodiment of this application;
FIG. 2 is a diagram of an architecture of a 5G system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6A and FIG. 6B are a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

"At least one piece (item)" described in this application below indicates one piece (item) or more pieces (items). "A plurality of (items)" means two (items) or more than two (items). The term "and/or" describes an association relationship between associated objects and indicates that three relationships may exist. For example, A and/or B may indicate the following three cases: Only A exists, both A and B exist, and only B exists. The character "/" generally indicates an "or" relationship between associated objects. In addition, it should be understood that although the terms first, second, and the like may be used in this application to describe objects, these objects are not limited by these terms. These terms are merely used to distinguish the objects from each other.

Terms "including", "having", and any other variant thereof mentioned in descriptions of this application below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, the term such as "an example" or "for example" is used to represent giving an example, an illustration, or descriptions. Any method or design solution described in this application as "example" or "for example" should not be explained as being more preferred or advantageous over another method or design solution. Exactly, use of the word "example", "for example" or the like is intended to present a relative concept in a specific manner.

Technologies provided in this application may be applied to various communication systems. For example, the communication system may be a 4^{th} generation (4^{th} generation, 4G) communication system (for example, a long term evolution (long term evolution, LTE) system), a 5^{th} generation (5^{th} generation, 5G) communication system, a worldwide interoperability for microwave access (worldwide interoperability for microwave access, WiMAX) system, a wireless local area network (wireless local area network, WLAN) system, a system integrating a plurality of systems, or a future communication system like a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description. For example, the communication system may include at least one terminal and at least one access network device. The access network device may send a downlink signal to the terminal, and/or the terminal may send an uplink signal to the access network device. In addition, it may be understood that if the communication system includes a plurality of terminals, the plurality of terminals may also send signals to each other. In other words, both a signal sending network element and a signal receiving network element may be terminals.

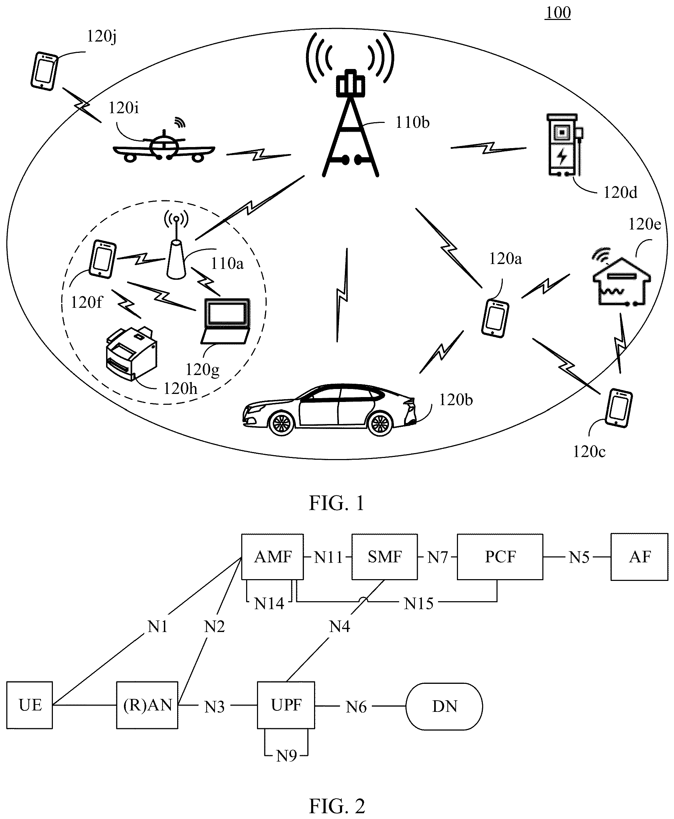

A communication method provided in embodiments of this application may be applied to a wireless communication system like 5G, 6G, or satellite communication. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G or 4G) radio access network. One or more communication devices (120a to 120j, which are collectively referred to as 120) may be interconnected or connected to one or more network devices (110a and 110b, which are collectively referred to as 110) in the radio access network 100. FIG. 1 is only a diagram for illustration. The wireless communication system may further include another device, for example, may further include a core network device, a wireless relay device, and/or a wireless backhaul device, which are not shown in FIG. 1.

For example, in actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in this embodiment of this application.

The network device may be an entity that is configured to send or receive a signal on a network side. The network device may be an access network device via which the communication device accesses the wireless communication system in a wireless manner. For example, the network device may be a base station. The base station may broadly cover various names in the following, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission and reception point (transmitting and receiving point, TRP), a transmission point (transmission point, TP), a master station MeNB, a secondary station SeNB, a multi-RAT radio node, a home NodeB, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used for the network device are not limited in this embodiment of this application.

All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or some functions of the network device.

The network device may be fixed or mobile. For example, the base stations 110a and 110b are stationary and are used in wireless transmission and reception in one or more cells from the communication device 120. A helicopter or uncrewed aerial vehicle 120i shown in FIG. 1 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this application, a communication apparatus configured to implement functions of the access network may be an access network device, may be a network device having a part of functions of the access network, or may be an apparatus that can support implementation of the functions of the access network, for example, a chip system, a hardware circuit, a software module, or a combination of a hardware circuit and a software module. The apparatus may be installed in the access network device or used together with the access network device. In a method in this application, an example in which the communication apparatus configured to implement the functions of the access network device is an access network device is used for description.

The communication device may be an entity, for example, a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device, vehicle-to-everything (vehicle-to-everything, V2X), point-to-point (point-to-point, P2P), machine-to-machine (machine-to-machine, M2M), machine type communication (machine type communication, MTC), internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and self-delivery and mobility. Some examples of the communication device 120 are a user equipment (user equipment, UE) in the 3^{rd} generation partnership project (the 3^{rd} generation partnership project, 3GPP) standard, a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet, a palmtop computer, a mobile internet device (mobile internet device, MID), a wearable device like a smart watch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city) like a smart fueler, a terminal on a high-speed railway, and a wireless terminal in a smart home (smart home) like a smart speaker, a smart coffee machine, or a smart printer. The communication device 120 may be a wireless device in the foregoing various scenarios or an apparatus disposed in a wireless device, for example, a communication module, a modem, or a chip in the foregoing device. The communication device may also be referred to as a terminal, a terminal device, a user equipment (user equipment, UE), a mobile station (mobile station, MS), a mobile terminal (mobile terminal, MT), or the like. The communication device may alternatively be a communication device in a future wireless communication system. The communication device may be used in a dedicated network device or a general-purpose device. A specific technology and a specific device form used by the communication device are not limited in embodiments of this application.

For example, the communication device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a communication apparatus configured to implement functions of the communication device may be a terminal, may be a terminal having a part of functions of the communication device, or may be an apparatus that can support implementation of the functions of the communication device, for example, a chip system. The apparatus may be installed in a terminal or used together with a terminal. In this application, the chip system may include a chip, or may include the chip and another discrete component. In the technical solutions provided in this application, an example in which the communication apparatus is a terminal or a UE is used for description.

For example, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be deployed in different places. For example, the RRU is remotely deployed in a heavy-traffic region, and the BBU is deployed in a central equipment room. Alternatively, the BBU and the RRU may be deployed in a same equipment room. Alternatively, the BBU and the RRU may be different components at a same rack. For example, one cell may correspond to one carrier or one component carrier.

It may be understood that this application may be applied between a network device and a communication device, between network devices, or between communication devices, that is, between a primary device and a secondary device. The primary device may be a network device or a communication device. When the primary device is a network device, the secondary device may be another network device or a communication device. When the primary device is a communication device, the secondary device may be another communication device.

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

For example, the protocol layer structure between the access network device and the terminal may further include an artificial intelligence (artificial intelligence, AI) layer, used to transmit data related to an AI function.

Data transmission between the access network device and the terminal is used as an example. Data transmission needs to pass through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal may further have an application layer and a non-access stratum. The application layer may be used to provide a service for an application installed in the terminal. For example, downlink data received by the terminal may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that processing function division of the CU and the DU based on the protocol layers is merely an example, and there may be other division. For example, the CU or the DU may be divided to have functions of more protocol layers. For another example, the CU or the DU may be further divided to have some processing functions of a protocol layer. In a design, a part of functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on service types or other system requirements. For example, division may be performed based on delays. Functions whose processing time needs to satisfy a delay requirement are set on the DU, and functions whose processing time does not need to satisfy the delay requirement are set on the CU. In another design, the CU may alternatively have one or more functions of the core network. For example, the CU may be disposed on a network side to facilitate centralized management. In another design, an RU of the DU is disposed remotely. The RU has a radio frequency function.

For example, the DU and the RU may be divided at a physical layer (physical layer, PHY). For example, the DU may implement higher-layer functions of the PHY layer, and the RU may implement lower-layer functions of the PHY layer. When used for sending, a function of the PHY layer may include cyclic redundancy check (cyclic redundancy check, CRC) code addition, channel coding, rate matching, scrambling, modulation, layer mapping, precoding, resource mapping, physical antenna mapping, and/or radio frequency sending functions. When used for reception, a function of the PHY layer may include CRC, channel decoding, rate de-matching, descrambling, demodulation, layer de-mapping, channel detection, resource de-mapping, physical antenna de-mapping, and/or radio frequency receiving functions. The higher-layer function of the PHY layer may include a part of functions of the PHY layer. For example, the part of functions are closer to the MAC layer. The lower-layer function of the PHY layer may include another part of functions of the PHY layer. For example, the part of functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding. The lower-layer function of the PHY layer may include resource mapping, physical antenna mapping, and radio frequency sending functions.

For example, a function of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

In the foregoing architecture, signaling generated by the CU may be sent to a terminal via the DU, or signaling generated by a terminal may be sent to the CU via the DU. For example, signaling at an RRC layer or the PDCP layer is finally processed into signaling at the physical layer and sent to the terminal, or is converted from signaling received from the physical layer. In this architecture, signaling at the RRC layer or the PDCP layer may be considered as being sent via the DU or being sent via the DU and the RU.

For example, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In different systems, the CU (or the CU-CP and the CU-UP), the DU, or the RU may also have different names, but a person skilled in the art may understand meanings thereof. For example, in an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU.

It should be understood that a quantity and types of devices in the communication system shown in FIG. 1 are merely used as an example, and this application is not limited thereto. In actual application, the communication system may further include more terminals and more access network devices, and may further include another network element, for example, may include a core network device and/or a network element configured to implement an artificial intelligence function.

It may be understood that all or a part of functions implemented by one or more of the terminal, the access network device, the core network device, or the network element configured to implement the artificial intelligence function may be virtualized, that is, implemented through one or more of a dedicated processor or a general-purpose processor and a corresponding software module. Because the terminal and the access network device are related to an air interface transmission interface, receiving and sending functions of the interface may be implemented by hardware. Core network devices such as an operation administration and maintenance (operation administration and maintenance, OAM) network element can be virtualized. For example, one or more functions of a virtualized terminal, access network device, core network device, or network element configured to implement the artificial intelligence function may be implemented by a cloud device, for example, implemented by a cloud device in an over the top (over the top, OTT) system.

The method provided in this application may be used for communication between an access network device and a terminal, or may be used for communication between an access network device and a core network element, or may be used for communication between a terminal and a core network element, or the like. This is not limited.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)", or "receiving information from... (for example, a terminal)", or a related illustration in the accompanying drawings may be understood as that a source of the information is the terminal, and may include directly or indirectly receiving the information from the terminal. Information may undergo necessary processing between the source for sending the information and the destination, for example, a format change. However, the destination may understand valid information from the source. Similar descriptions in this application may be understood similarly, and details are not described herein.

A 5G communication system is used as an example. FIG. 2 is a diagram of an architecture of a 5G system according to an embodiment of this application. The architecture of the 5G system is divided into two parts: an access network and a core network. The access network is configured to implement a function related to radio access. The core network may include but is not limited to the following network elements:

An AMF is an access and mobility management function network element. Main functions include user registration management, reachability detection, SMF node selection, mobility status transition management, and the like.

An SMF is a session management function network element. Main functions are to control session establishment, modification, and deletion, user plane node selection, and the like.

A UPF is a user plane function network element. Main functions include routing and forwarding a data packet, a mobility anchor, an uplink classifier to support a service flow in being routed to a data network, a branch point to support a multi-homing protocol data unit (protocol data unit, PDU) session, and the like.

A PCF is a policy control function network element. A main function is a policy decision point, and provides rules such as service data flow-based and application-based detection, gating control, quality of service (quality of service, QoS), and flow-based charging control.

An access network node ((radio) access network, (R)AN) is mainly used to provide a wireless connection, and is located between a UE and a core network node.

An AF is mainly used to interact with a 3^{rd} generation partnership project (3^{rd} generation partnership project, 3GPP) core network to provide services and affect service flow routing, access network capability exposure, and policy control.

A network exposure function (network exposure function, NEF) network element securely exposes a service and a capability provided by a 3GPP network function, for example, a third party, edge computing, or an AF.

A data network (data network, DN) provides, for example, an operator service, internet access, or a third-party service.

It can be learned from the function descriptions of the foregoing network elements that the AF is configured to provide a service. Therefore, the AF needs to adjust a rate in time based on a network congestion status, to improve user experience. However, for example, in a switching scenario, congestion statuses of a source base station and a target base station are different. The source base station may be congested due to overload, while the target base station is usually not congested (a network selects the target base station based on channel quality, a load status, and the like of the target base station). Therefore, after the source base station is congested and the target base station is switched to, if the source base station cannot notify the AF in time that the source base station is no longer congested, a sending rate of the AF is reduced, and user experience is degraded.

In an existing solution, a RAN sends an air interface congestion status to a 5GC, and then the 5GC sends the air interface congestion status to an AF for rate adjustment. There are mainly the following three solutions:

### Solution 1: Quality of service monitoring (QoS monitoring, QM) reporting mechanism

The AF subscribes to an event notification for a 5G system (5^{th} generation system, 5GS). The event notification may be an event like a congestion information reporting event.

When detecting that a corresponding event occurs (for example, congestion occurs), the RAN encapsulates information into a GTP-U header for sending to a UPF.

The UPF reports the event to an application (a user plane) through a NEF or directly (or reports the event to a control plane through an SMF/a PCF/the NEF), so that the application performs corresponding adjustment based on the event.

### Solution 2: UPF-L4S (low-latency, low-loss, scalable throughput)

After detecting that an air interface is congested, the RAN encapsulates congestion information into a GTP-U header for sending to a UPF.

For a downlink, after receiving the congestion information, the UPF performs explicit congestion notification (explicit congestion notification, ECN) marking on a data packet at an IP layer (marks the explicit congestion notification as CE), and then sends the data packet to the UE. Then, the UE sends a congestion marker to an application (for example, an ECE in a TCP) according to an upper-layer protocol, to perform corresponding adjustment.

For an uplink, after receiving the congestion information, the UPF performs ECN congestion marking on a data packet at an IP layer (that is, marks the ECN as CE), and then sends the data packet to an access stratum (access stratum, AS). Then, the AS sends a congestion marker to a UE according to an upper-layer protocol. After receiving the congestion marker, the UE performs corresponding adjustment.

### Solution 3: RAN-L4S

After the RAN perceives that an air interface is congested, the RAN performs ECN congestion marking on a data packet at an IP layer, and then sends the data packet to a UE.

The UE sends the congestion indication flag to an application according to an upper-layer protocol. The application performs corresponding adjustment after receiving the congestion indication flag.

However, the foregoing three solutions are mainly for a scenario in which switching does not occur.

When the source base station is congested, after receiving the congestion information, the AF adjusts a rate to relieve the congestion as much as possible. However, when the UE is switched from the source base station to the target base station, because the target base station is usually not congested, in this case, the AF may restore to an original rate for sending. However, for the foregoing Solution 1 and Solution 2, in the existing mechanisms, the AF cannot be notified in time of information indicating that congestion no longer exists. As a result, the AF still adjusts a rate based on a congestion status of the source base station, resulting in degraded user experience.

Therefore, in a switching scenario, when the source base station is congested but the target base station is not congested (usually), the AF needs to be notified in time that a network is no longer congested, so that the AF restores to an original rate. This improves user experience.

Certainly, solutions in embodiments of this application are not limited to the switching scenario.

For the foregoing problem, this application provides a communication solution. If a first access network device determines that switching occurs, the first access network device sends network status information. This improves timeliness of reporting the network status information.

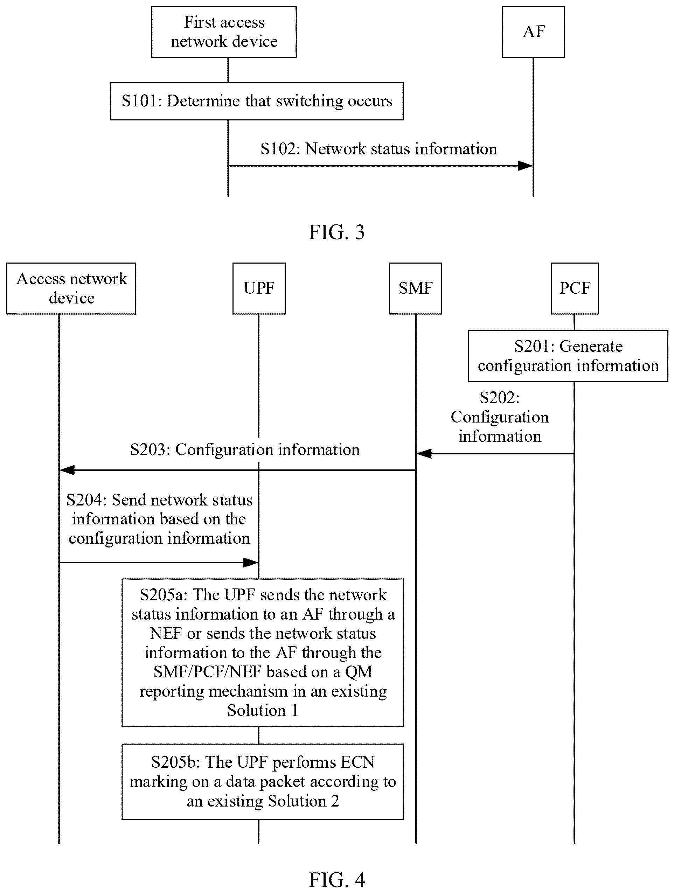

FIG. 3 is a schematic flowchart of a communication method according to an embodiment of this application. It may be understood that, in this application, an example in which a first access network device and an AF are used as execution bodies of an interaction example is used for description. However, an execution body of the interaction example is not limited in this application. For example, the first access network device in the method provided in this application may alternatively be a chip, a chip system, or a processor used in a first access network device, or may be a logical node, a logical module, or software that can implement all or some functions of first access network devices. Similarly, the AF in the method provided in this application may alternatively be a chip, a chip system, or a processor used in an AF, or may be a logical node, a logical module, or software that can implement all or some functions of an AF. For example, the method may include the following steps.

S101: The first access network device determines that switching occurs, where that switching occurs is that switching from a second access network device to the first access network device is performed.

The first access network device is a target access network device for switching. During switching, the second access network device, a UE, and a core network element interact with the first access network device, and the first access network device may obtain some switching-related information, to determine that switching occurs. The first access network device has a capability of determining that switching occurs.

Occurrence of switching may be a start of switching, performing switching, or switching completion.

S102: The first access network device sends network status information to the AF, and correspondingly, the AF receives the network status information.

For example, the first access network device may send the network status information when switching starts, during switching, or after switching is completed.

For example, during switching, the first access network device receives an N3 interface end marker, and the first access network device sends the network status information in response to the received N3 interface end marker.

Alternatively, the first access network device receives a switching request, and sends the network status information in response to the received switching request.

The network status information indicates at least one of the following: a network congestion degree, whether network congestion occurs, or congestion information. The congestion information may be a congestion information parameter in quality of service monitoring (QoS monitoring, QM).

The network status information is used to trigger the AF to determine a transmission policy based on the network status information. The AF may adjust an appropriate transmission policy based on the network status information. The transmission policy includes an adjustment policy for a transmission rate, a bit rate, and the like. For example, the transmission policy includes a transmission rate, and that the network status information is used to trigger the AF to adjust the transmission rate based on the network status information includes: If the network status information indicates that no network congestion occurs, the AF may increase the transmission rate, to improve user experience. For another example, if the network status information indicates that network congestion occurs, the AF may decrease the transmission rate, to reduce a packet loss rate. In the switching scenario, the access network device in this embodiment may be a target access network device.

After receiving the network status information, the AF may adjust an appropriate transmission policy based on the network status information, including adjusting a transmission rate, a bit rate, and the like.

According to the communication method provided in this embodiment of this application, if the first access network device determines that switching occurs, the first access network device sends the network status information. This improves timeliness of reporting the network status information.

Further, the network status information is used to trigger the AF to determine the transmission policy based on the network status information, so that the AF can determine the appropriate transmission policy based on the network status information.

The foregoing embodiment describes a case in which the target access network device may send the network status information when determining that switching occurs. The following embodiment describes a case in which a core network may further configure an access network device to report network status information in time.

For the foregoing problem, this application further provides a communication solution. In configuration information, network status information is indicated to be immediately reported or the network status information is indicated to be reported when a change of an air interface status meets a condition, so that an access network device can report the network status information to an AF in time. This improves timeliness of reporting the network status information.

FIG. 4 is a schematic flowchart of a communication method according to an embodiment of this application. It may be understood that, in this application, an example in which a source access network device, a target access network device, a UPF, an SMF, and a PCF are used as execution bodies of an interaction example is used for description. However, an execution body of the interaction example is not limited in this application. For example, an access network device in the method provided in this application may alternatively be a chip, a chip system, or a processor used in an access network device, or may be a logical node, a logical module, or software that can implement functions of all or some of access network devices. Similarly, a core network element in the method provided in this application may alternatively be a chip, a chip system, or a processor used in a core network element, or may be a logical node, a logical module, or software that can implement all or some functions of a core network element. For example, the method may include the following steps.

S201: The PCF generates configuration information.

When a UE initiates a request for establishing a new data connection (for example, a PDU session request), and the PCF receives a policy configuration request message from the SMF, the PCF may generate configuration information and deliver the configuration information to an access network device that currently serves the UE. For example, when a location of the UE changes, a source base station is overloaded, or the like, a network initiates a switching procedure to switch the UE from the source base station to a target base station. After base station switching is completed, the UE initiates a request for establishing a new PDU session, and the PCF delivers new configuration information to the target base station. Certainly, in another scenario in which a new PDU session is established, the PCF may generate and deliver new configuration information.

The UE initiates the request for establishing the new PDU session, and a network environment may change. To enable the AF to learn of a network status in time, the PCF generates configuration information. The configuration information indicates to immediately report network status information or report network status information when a change of an air interface status meets a condition. The network status information indicates at least one of the following: a network congestion degree, whether network congestion occurs, or congestion information. The congestion information herein may be a congestion information parameter in QM.

The PCF configures the access network device to immediately report the network status information or report the network status information when the change of the air interface status meets the condition. The network status information is used to trigger the AF to determine a transmission policy based on the network status information. The AF may adjust an appropriate transmission policy based on the network status information. The transmission policy includes an adjustment policy for a transmission rate, a bit rate, and the like. For example, the transmission policy includes a transmission rate, and that the network status information is used to trigger the AF to adjust the transmission rate based on the network status information includes: If the network status information indicates that no network congestion occurs, the AF may increase the transmission rate, to improve user experience. For another example, if the network status information indicates that network congestion occurs, the AF may decrease the transmission rate, to reduce a packet loss rate. In the switching scenario, the access network device in this embodiment may be a target access network device.

In this embodiment, the PCF may extend a PCC rule. For example, the configuration information may be included in the PCC rule, or the configuration information may be included in a quality of service monitoring configuration in the PCC rule.

When the configuration information generated by the PCF indicates to immediately report the network status information, the following several implementations may be included.

In an implementation, the configuration information includes configuration information of quality of service monitoring indicating to immediately report the network status information. Therefore, the access network device immediately reports the network status information upon receiving the configuration information. It may be understood that, in this implementation, a specific parameter included in the configuration information is not limited, but the access network device immediately reports the network status information upon receiving the configuration information.

In another implementation, the configuration information of quality of service monitoring includes a congestion information parameter indicating to immediately report the network status information. Generally, the quality of service monitoring includes a plurality of parameters. When the configuration information of the quality of service monitoring received by the access network device includes the congestion information parameter, the access network device immediately reports the network status information. However, in an existing mechanism, the access network device performs reporting only when congestion occurs, or periodically performs reporting. As a result, reporting cannot be performed in time.

In another implementation, the configuration information includes the configuration information of quality of service monitoring indicating to report the network status information when switching occurs. For example, the access network device receives an N3 interface end marker (N3 end marker), and in response to the received N3 interface end marker, the access network device determines that switching occurs; or the access network device receives a switching request, and in response to the received switching request, the access network device determines that switching occurs. After determining that switching occurs, the access network device immediately reports the network status information, and does not need to report the network status information after switching is completed, so that the network status information can be reported in time.

In another implementation, an event-triggered report in configuration information of quality of service monitoring includes a switching event indicating to report the network status information when a switching event occurs. The event-triggered report may include the switching event. In this case, once switching occurs, the access network device may immediately report the network status information, and does not need to report the network status information after switching is completed, so that the network status information can be reported in time. The target access network device, the UE, and the core network element interact with the source access network device, and the target access network device may obtain some switching-related information, so that a switching event may occur. The target access network device in this embodiment has a capability of determining that a switching event occurs.

When the configuration information generated by the PCF includes a first threshold, the configuration information indicates to report the network status information when a difference between the to-be-reported network status information and previously reported network status information is greater than or equal to the first threshold. The configuration information may further include the first threshold. In other words, a first threshold may be configured. When a change of the network status information exceeds the first threshold, the network status information is immediately reported, so that the network status information can be reported in time.

S202: The PCF sends the configuration information to the SMF, and correspondingly, the SMF receives the configuration information.

S203: The SMF sends the configuration information to the access network device, and correspondingly, the access network device receives the configuration information.

After the SMF receives the configuration information from the PCF, the SMF sends the configuration information to the access network device. The configuration information is used to trigger the target access network device to report the network status information based on the configuration information or report the network status information when the change of the air interface status meets the condition.

For example, the SMF may send the configuration information to the access network device through an AMF.

For example, the SMF may alternatively generate the configuration information. Therefore, step S201 and step S202 are optional, and are represented by dashed lines in the figure.

S204: The access network device sends the network status information to the UPF based on the configuration information.

When the configuration information generated by the PCF indicates to immediately report the network status information,
when the configuration information includes the configuration information of the quality of service monitoring, the access network device immediately reports the network status information if the access network device receives the configuration information; or
when the configuration information of the quality of service monitoring includes the congestion information parameter, the access network device immediately reports the network status information if the configuration information of the quality of service monitoring received by the access network device includes the congestion information parameter; or
when the configuration information including the configuration information of quality of service monitoring indicates to report network status information once switching occurs, the access network device sends the network status information based on the configuration information after determining that switching occurs, where that the access network device determines that switching occurs includes: The access network device receives the N3 interface end marker, and determines that switching occurs; or the access network device receives the switching request, and determines that switching occurs.

The event-triggered report in the quality of service monitoring configuration information including the switching event indicates to report the network status information once switching occurs. In this case, the access network device determines that the access network device may immediately report the network status information once the switching event occurs.

If the configuration information generated by the PCF indicates to report the network status information when the change of the air interface status meets the condition, the access network device compares, when receiving the configuration information, whether the difference between the to-be-reported network status information and the previously reported network status information is greater than or equal to the first threshold, and reports the network status information if the difference is greater than or equal to the first threshold.

For example, the access network device may encapsulate the network status information into a general packet radio service tunneling protocol for a user plane (GPRS tunneling protocol, GTP-U) header for sending to the UPF.

Then, the access network device sends information including the GTP-U header to a user plane function network element, so that the user plane function network element sends the information including the GTP-U header to an application function network element through at least one of a session management function network element, a policy control function network element, and a network exposure function entity, that is, the following step S205a or step S205b is performed.

S205a: The UPF sends the network status information to the AF through the NEF or sends the network status information to the AF through the SMF/PCF/NEF based on the QM reporting mechanism in the existing Solution 1.

S205b: The UPF performs ECN marking on the data packet according to the existing Solution 2.

After receiving the network status information, the AF may adjust an appropriate transmission policy based on the network status information. For example, the transmission policy includes a transmission rate, and if the network status information indicates that no network congestion occurs, the AF may increase the transmission rate, to improve user experience. For another example, if the network status information indicates that network congestion occurs, the AF may decrease the transmission rate, to reduce a packet loss rate.

According to the communication method provided in this embodiment of this application, the PCF indicates, in the configuration information, to immediately report the network status information or report the network status information when the change of the air interface status meets the condition, so that the access network device can report the network status information to the AF in time. This improves timeliness of reporting the network status information.

Further, the network status information is used to trigger the AF to determine the transmission policy based on the network status information, so that the AF can determine the appropriate transmission policy based on the network status information.

The foregoing embodiment describes a case in which the access network device supports reporting of the network status information. The following embodiment describes a case in which the access network device does not support reporting of the network status information, and the core network element may alternatively report the network status information.

Therefore, this application further provides a communication solution. When determining that a network status information reporting condition is met, a first network element sends first indication information to a second network element, where the first indication information indicates that a network is no longer congested, so that the second network element can determine a transmission policy in time based on the first indication information. This improves timeliness of reporting a congestion status.

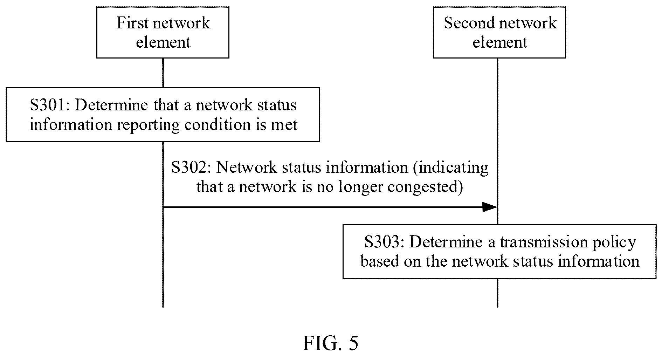

FIG. 5 is a schematic flowchart of another communication method according to an embodiment of this application. It may be understood that, in this application, an example in which a first network element, a second network element, and a third network element are used as execution bodies of an interaction example is used for description. However, an execution body of the interaction example is not limited in this application. For example, the first network element, the second network element, and the third network element in the method provided in this application may alternatively be chips, chip systems, or processors used in a first network element, a second network element, and a third network element, or may be logical nodes, logical modules, or software that can implement functions of all or some of access network devices. For example, the method may include the following steps.

S301: The first network element determines that a network status information reporting condition is met.

In this embodiment, the first network element may be an SMF, a UPF, or the like.

The network status information reporting condition may include at least one of the following:
The first network element generates an N3 interface end marker, and sends network status information;
the first network element receives an N3 interface end marker, and the first network element sends network status information in response to receiving the N3 interface end marker; or
the first network element sends an N3 interface end marker to a source base station, and sends network status information.

In a switching scenario, the N3 interface end marker indicates to no longer send data to the source access network device.

Certainly, the network status information reporting condition in this embodiment is not limited to any one of the foregoing three conditions, and may alternatively be another condition. Any condition that can enable the network status information to be reported in time falls within the protection scope of this embodiment of this application.

For example, the first network element generates the N3 interface end marker. For example, a UPF or an SMF may generate the N3 interface end marker. If the UPF or the SMF generates the N3 interface end marker, the UPF or the SMF considers that the network status information reporting condition is met.

For example, the first network element receives the N3 interface end marker. For example, the UPF may receive the N3 interface end marker sent by the SMF, or the SMF may receive the N3 interface end marker sent by the UPF. When the UPF or the SMF receives the N3 interface end marker, it is considered that the network status information reporting condition is met.

For example, the first network element sends the N3 interface end marker to the source base station. For example, the UPF may send the N3 interface end marker to the source base station. It may be understood that the UPF sends the N3 interface end marker to the source base station, but in this case, the switching process is not completed. After the UPF sends the N3 interface end marker to the source base station, the UPF determines that the network status information reporting condition is met, to report the network status information in time, and does not need to report the network status information only when switching is completed.

S302: The first network element sends the network status information to the second network element, and correspondingly, the second network element receives the network status information.

After determining that the network status information reporting condition is met, the first network element may send the network status information to the second network element. The network status information indicates that a network is no longer congested. For example, the second network element may be an AF.

When the network status information indicates that the network is no longer congested, there may be the following several implementations.

In an implementation, the network status information indicates a network congestion status. The network congestion status includes at least one of the following: the network is no longer congested (no congestion), a network congestion percentage is 0%, and the network congestion percentage is less than or equal to a first threshold. This implementation clearly indicates the network congestion status.

In another implementation, the network status information is a data packet, and the data packet does not include a congestion marker. For example, in the switching scenario, the first network element is the UPF. After determining that the network status information reporting condition is met, and before receiving congestion information sent by a target access network device, the UPF no longer performs explicit congestion notification marking on the data packet based on congestion information sent by the source access network device. In this case, the first network element sends a data packet to the second network element, where the data packet does not include the congestion marker. In this implementation, that the data packet does not include the congestion marker implicitly indicates that the current network is no longer congested.

The first network element may send the network status information to the second network element through at least one of an SMF, a PCF, and a NEF; or the first network element sends the network status information to the second network element through the PCF and/or the NEF.

S303: The second network element determines a transmission policy based on the network status information.

For example, the second network element may adjust an appropriate transmission policy based on the network status information. The transmission policy includes an adjustment policy for a transmission rate, a bit rate, and the like. Because the network status information indicates that the network is no longer congested, the transmission policy determined by the second network element may be increasing the transmission rate, to improve user experience.

According to the communication method provided in embodiments of this application, when determining that the network status information reporting condition is met, the first network element sends the network status information to the second network element, where the network status information indicates that the network is no longer congested. In this way, the second network element can determine a transmission policy in time based on the network status information. This improves timeliness of reporting a congestion status.

The following uses an example in which the first network element is a UPF to describe in detail how to report the congestion status in time.

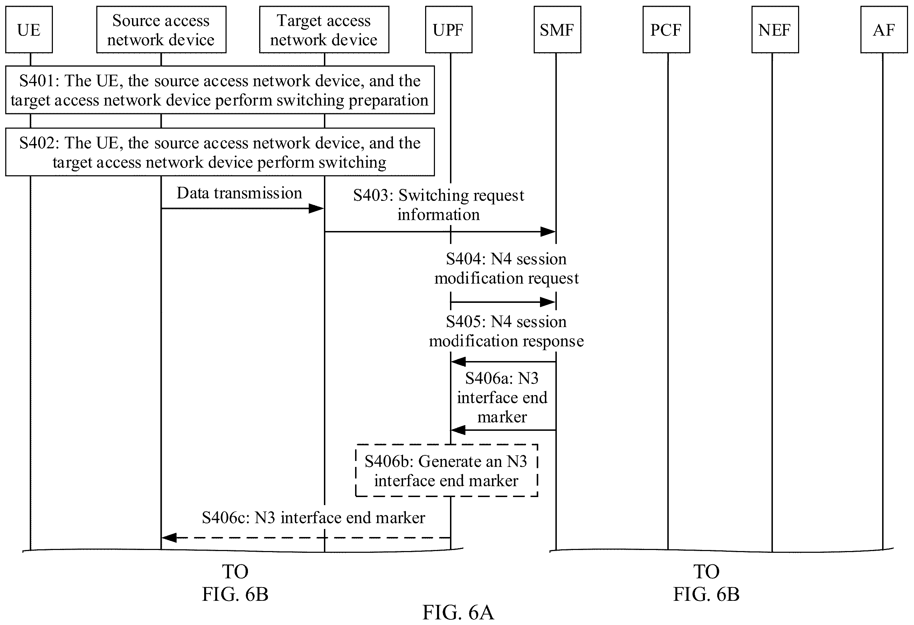

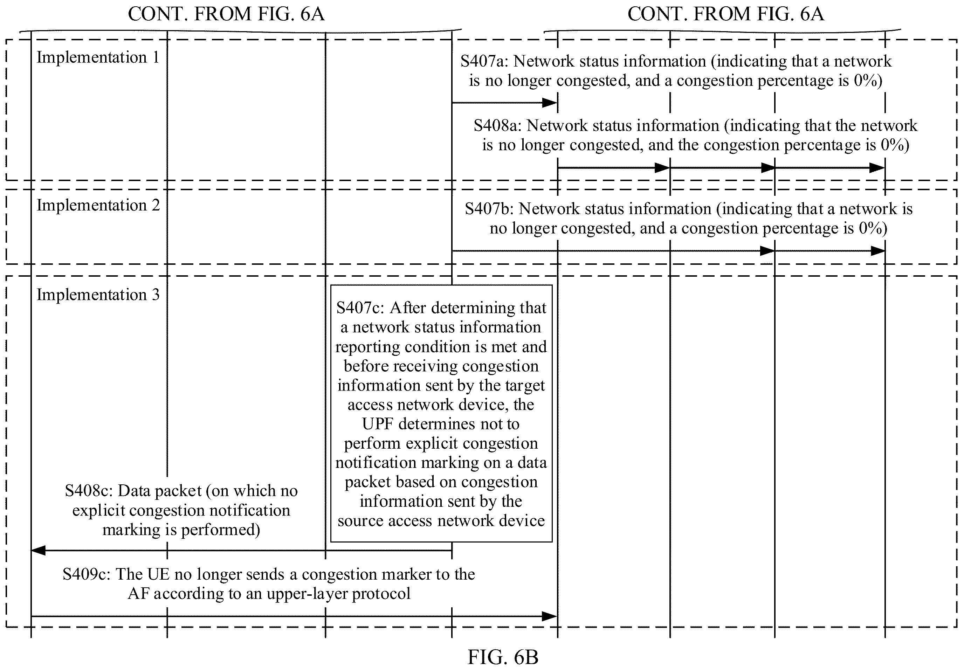

FIG. 6A and FIG. 6B are a schematic flowchart of another communication method according to an embodiment of this application. For example, the method may include the following steps.

S401: A UE, a source access network device, and a target access network device perform switching preparation.

S402: The UE, the source access network device, and the target access network device perform switching.

Then, the source access network device transmits data to the target access network device.

S403: The target access network device sends switching request information to an SMF.

S404: A UPF sends an N4 session modification request to the SMF.

S405: The SMF sends an N4 session modification response to the UPF.

Step S401 to step S405 serve as a switching preparation and execution process. For details, refer to an existing implementation.

After sending the N4 session modification response to the SMF, the UPF performs step S406a, step S406b, or step S406c. After performing step S406a, step S406b, or step S406c, the UPF may determine that a network status information reporting condition is met.

In other words, when the UPF determines that the network status information reporting condition is met, there may be the following several implementations.

Implementation 1 - S406a: The SMF sends an N3 interface end marker to the UPF, and correspondingly, the UPF receives the N3 interface end marker. The UPF sends network status information in response to receiving the N3 interface end marker.

Implementation 2 - S406b: The UPF generates an N3 interface end marker, and sends network status information.

Implementation 3 - S406c: The UPF sends an N3 interface end marker to the source access network device, and sends network status information.

One of the foregoing step S406a, step S406b, and step S406c is performed.

In a switching scenario, the N3 interface end marker indicates to no longer send data to the source access network device. However, in this phase, a switching process is not completed.

After determining that the network status information reporting condition is met, the UPF indicates, to an AF, that a network is no longer congested.

When the UPF indicates, to the AF, that the network is no longer congested, there may be the following several implementations.

### Implementation 1 (sending the network status information through a control plane):

S407a: The UPF sends the network status information to the SMF, where the network status information indicates that the network is no longer congested, and a congestion percentage is 0% (no congestion, 0%).

S408a: After receiving the network status information, the SMF sends the network status information to the AF through a PCF or a NEF.

### Implementation 2 (sending the network status information through a user plane):

S407b: The UPF sends the network status information to the AF through a NEF, where the network status information indicates that the network is no longer congested, and a congestion percentage is 0% (no congestion, 0%).

### Implementation 3:

S407c: After determining that the network status information reporting condition is met and before receiving congestion information sent by the target access network device, the UPF determines not to perform explicit congestion notification marking on a data packet based on congestion information sent by the source access network device.

S408c. The UPF sends a data packet to the UE, where no explicit congestion notification marking is performed on the data packet.

S409c: The UE no longer sends a congestion marker to the AF according to an upper-layer protocol.

In Implementation 1 and Implementation 2, a QM mechanism is used for indication. In Implementation 3, explicit congestion notification marking is not performed to indicate that the network is no longer congested.

In another embodiment, after the SMF senses switching, the SMF sends indication information to the UPF. The indication information indicates that the network is no longer congested. For example, the indication information indicates a network congestion status. The network congestion status includes at least one of the following: the network is no longer congested (no congestion), a network congestion percentage is 0%, and the network congestion percentage is less than or equal to a first threshold. For another example, the indication information is a data packet, and the data packet does not include a congestion marker. After receiving the indication information, the UPF may indicate, to the AF in the foregoing three implementations, that the network is no longer congested.

According to the communication method provided in embodiments of this application, after receiving the N3 interface end marker, generating the N3 interface end marker, or sending the N3 interface end marker to the source access network device, the UPF indicates, to the AF, that the network is no longer congested, so that the AF can determine the transmission policy in time. This improves timeliness of reporting the congestion status.

The following uses an example in which the first network element is an SMF to describe in detail how to report the congestion status in time.

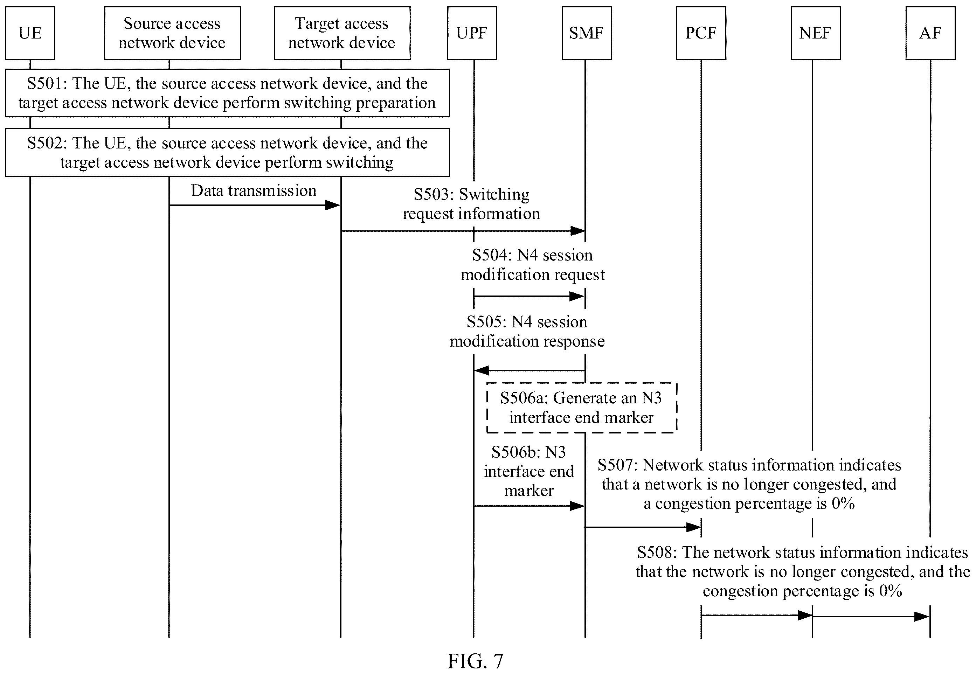

FIG. 7 is a schematic flowchart of another communication method according to an embodiment of this application. For example, the method may include the following steps.

S501: A UE, a source access network device, and a target access network device perform switching preparation.

S502: The UE, the source access network device, and the target access network device perform switching.

Then, the source access network device transmits data to the target access network device.

S503: The target access network device sends switching request information to an SMF.

S504: A UPF sends an N4 session modification request to the SMF.

S505: The SMF sends an N4 session modification response to the UPF.

Step S501 to step S505 serve as a switching preparation and execution process. For details, refer to an existing implementation.

After sending the N4 session modification response to the SMF, the UPF may perform the following step S506a or step S506b. After performing step S506a or step S506b, the SMF may determine that a network status information reporting condition is met.

S506a: The SMF generates an N3 interface end marker.

S506b: The UPF sends an N3 interface end marker to the SMF, and correspondingly, the SMF receives the N3 interface end marker.

In a switching scenario, the N3 interface end marker indicates to no longer send data to the source access network device. However, in this phase, a switching process is not completed.

After determining that the network status information reporting condition is met, the SMF indicates, to an AF, that a network is no longer congested.

S507: The SMF sends network status information to a PCF, where the network status information indicates that the network is no longer congested, and a congestion percentage is 0% (no congestion, 0%).

S508: After receiving the network status information, the PCF sends the network status information to the AF through a NEF.

According to the communication method provided in this embodiment of this application, after receiving the N3 interface end marker or generating the N3 interface end marker, the SMF indicates, to the AF, that the network is no longer congested, so that the AF can determine a transmission policy in time. This improves timeliness of reporting a congestion status.

If an access network device does not support reporting of network status information, a UE may alternatively report the network status information.

Therefore, this application further provides a communication solution. A UE obtains network status information, and sends the network status information to a first network element, so that the first network element can determine a transmission policy in time based on the received network status information. This improves timeliness of reporting a congestion status.

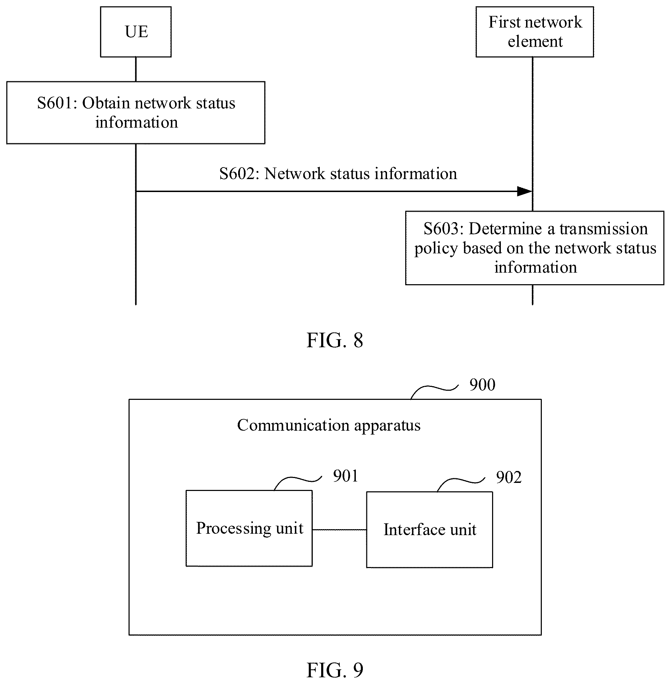

FIG. 8 is a schematic flowchart of another communication method according to an embodiment of this application. It may be understood that, in this application, an example in which a UE and a first network element are used as execution bodies of the interaction example is used for description. However, an execution body of the interaction example is not limited in this application. For example, the UE and the first network element in the method provided in this application may alternatively be chips, chip systems, or processors used in a UE and a first network element, or may be logical nodes, logical modules, or software that can implement functions all or some of access network devices. For example, the first network element may be an AF. For example, the method may include the following steps.

S601: The UE obtains network status information.

The UE may sense the network status information. For example, the UE may obtain the network status information in a manner such as self-measurement.

The network status information indicates at least one of the following: a network congestion degree, whether network congestion occurs, or congestion information.

S602: The UE sends the network status information to the first network element, and correspondingly, the first network element receives the network status information.

For example, when the UE may send the network status information to the first network element, there may be the following several implementations.

In an implementation, the UE sends the network status information to the first network element according to an upper-layer protocol.

In another implementation, the UE sends the network status information to a second network element, so that the second network element forwards the network status information to the first network element through at least one of an SMF, a PCF, and a NEF.

For example, the UE sends the network status information to a UPF, and the UPF sends the network status information to the AF through the NEF or directly. Alternatively, the UPF sends the network status information to the SMF, and the SMF sends the network status information to the AF through the PCF or the NEF.

For another example, the UE sends the network status information to the UPF, the UPF performs explicit congestion notification marking on a data packet at an IP layer for sending to the UE, and then the UE sends a congestion marker to the AF according to an upper-layer protocol.

For another example, the UE sends the network status information to the UPF. The UPF performs explicit congestion notification marking on a data packet at an IP layer for sending to an AS. Then, the AS sends a congestion marker to the UE according to an upper-layer protocol, and the UE sends the congestion marker to the AF according to the upper-layer protocol.

In another implementation, the UE sends the network status information to an SMF, and the SMF sends the network status information to the AF through a PCF.

S603: The first network element determines a transmission policy based on the network status information.

After receiving the network status information, the AF may adjust an appropriate transmission policy based on the network status information. The transmission policy includes an adjustment policy for a transmission rate, a bit rate, and the like. For example, that the network status information is used to trigger the AF to adjust the transmission rate includes: If the network status information indicates that no network congestion occurs, the AF may increase the transmission rate, to improve user experience. For another example, if the network status information indicates that network congestion occurs, the AF may decrease the transmission rate, to reduce a packet loss rate.

According to the communication method provided in embodiments of this application, the UE obtains the network status information, and sends the network status information to the first network element, so that the first network element can determine the transmission policy in time based on the received network status information. This improves timeliness of reporting a congestion status.

Based on a same concept, refer to FIG. 9. An embodiment of this application further provides a communication apparatus 900. The communication apparatus 900 includes a processing unit 901 and an interface unit 902. The communication apparatus 900 may be an access network device, an SMF, a PCF, a first network element, a second network element, or a terminal; or may be a communication apparatus that is used in an access network device, an SMF, a PCF, a first network element, a second network element, or a terminal and that can implement a communication method performed by the access network device, the SMF, the PCF, the first network element, the second network element, or the terminal; or may be a communication apparatus that is used together with an access network device, an SMF, a PCF, a first network element, a second network element, or a terminal and that can implement a communication method performed by the access network device, the SMF, the PCF, the first network element, the second network element, or the terminal.

The interface unit may also be referred to as a communication interface, an interface module, a transceiver module, a transceiver, a transceiver machine, a transceiver apparatus, or the like. The processing unit may also be referred to as a processor, a processing board, a processing unit, a processing apparatus, or the like. Optionally, the interface unit is configured to perform a sending operation and a receiving operation on a terminal side or an access network device side in the foregoing method. A component that is in the interface unit and that is configured to implement a receiving function may be considered as a receiving unit, and a component that is in the interface unit and that is configured to implement a sending function may be considered as a sending unit. In other words, the interface unit includes the receiving unit and the sending unit.

When the communication apparatus 900 is used in the access network device, the processing unit 901 may be configured to implement a processing function of the first access network device in the example in FIG. 3, and the interface unit 902 may be configured to implement receiving and sending functions of the first access network device in the example in FIG. 3. Alternatively, the communication apparatus may be understood with reference to the first aspect and the possible implementations of the first aspect in the Summary.

When the communication apparatus 900 is used in the access network device, the processing unit 901 may be configured to implement a processing function of the access network device in the example in FIG. 4, and the interface unit 902 may be configured to implement receiving and sending functions of the access network device in the example in FIG. 4. Alternatively, the communication apparatus may be understood with reference to the second aspect and the possible implementations of the second aspect in the Summary.

When the communication apparatus 900 is used in the SMF, the processing unit 901 may be configured to implement a processing function of the SMF in the example in FIG. 4, and the interface unit 902 may be configured to implement receiving and sending functions of the SMF in the example in FIG. 4. Alternatively, the communication apparatus may be understood with reference to the third aspect and the possible implementations of the third aspect in the Summary.

When the communication apparatus 900 is used in the PCF, the processing unit 901 may be configured to implement a processing function of the PCF in the example in FIG. 4, and the interface unit 902 may be configured to implement receiving and sending functions of the PCF in the example in FIG. 4. Alternatively, the communication apparatus may be understood with reference to the fourth aspect and the possible implementations of the fourth aspect in the Summary.

When the communication apparatus 900 is used in the first network element, the processing unit 901 may be configured to implement a processing function of the first network element in the example in FIG. 5, and the interface unit 902 may be configured to implement receiving and sending functions of the first network element in the example in FIG. 5. Alternatively, the communication apparatus may be understood with reference to the fifth aspect and the possible implementations of the fifth aspect in the Summary.

When the communication apparatus 900 is used in the second network element, the processing unit 901 may be configured to implement a processing function of the second network element in the example in FIG. 5, and the interface unit 902 may be configured to implement receiving and sending functions of the second network element in the example in FIG. 5. Alternatively, the communication apparatus may be understood with reference to the sixth aspect and the possible implementations of the sixth aspect in the Summary.

When the communication apparatus 900 is used in the terminal, the processing unit 901 may be configured to implement a processing function of the terminal in the example in FIG. 8, and the interface unit 902 may be configured to implement receiving and sending functions of the terminal in the example in FIG. 8. Alternatively, the communication apparatus may be understood with reference to the seventh aspect and the possible implementations of the seventh aspect in the Summary.

When the communication apparatus 900 is used in the first network element, the processing unit 901 may be configured to implement a processing function of the first network element in the example in FIG. 8, and the interface unit 902 may be configured to implement receiving and sending functions of the first network element in the example in FIG. 8. Alternatively, the communication apparatus may be understood with reference to the eighth aspect and the possible implementations of the eighth aspect in the Summary.

In addition, it should be noted that the interface unit and/or the processing unit may be implemented by using a virtual module. For example, the processing unit may be implemented by using a software function unit or a virtual apparatus, and the interface unit may be implemented by using a software function or a virtual apparatus. Alternatively, the processing unit or the interface unit may be implemented by using an entity apparatus. For example, if the apparatus is implemented by using a chip/chip circuit, the interface unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

In embodiments of this application, division into modules is an example, and is merely logical function division. In an actual implementation, there may be another division manner. In addition, function modules in examples of this application may be integrated into one processor, or each of the modules may exist alone physically, or two or more modules may be integrated into one module. The integrated module may be implemented in a form of hardware, or may be implemented in a form of a software function module.

Based on a same technical concept, an embodiment of this application further provides a communication apparatus 1000. For example, the communication apparatus 1000 may be a chip or a chip system. Optionally, in this application, the chip system may include a chip, or may include a chip and another discrete component.

The communication apparatus 1000 may be configured to implement a function of any network element in the communication system described in the foregoing example. The communication apparatus 1000 may include at least one processor 1010. Optionally, the processor 1010 is coupled to a memory. The memory may be located in the apparatus. Alternatively, the memory may be integrated with the processor. Alternatively, the memory may be located outside the apparatus. For example, the communication apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The communication apparatus 1000 may further include a communication interface 1030, and the communication apparatus 1000 may exchange information with another device through the communication interface 1030. For example, the communication interface 1030 may be a transceiver, a circuit, a bus, a module, a pin, or a communication interface of another type. When the communication apparatus 1000 is a chip-type apparatus or circuit, the communication interface 1030 in the apparatus 1000 may alternatively be an input/output circuit, and may input information (also referred to as receiving information) and output information (also referred to as sending information). The processor is an integrated processor, a microprocessor, an integrated circuit, or a logic circuit, and the processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1010 may operate in collaboration with the memory 1020 and the communication interface 1030. A specific medium connecting the processor 1010, the memory 1020, and the communication interface 1030 is not limited in this application.

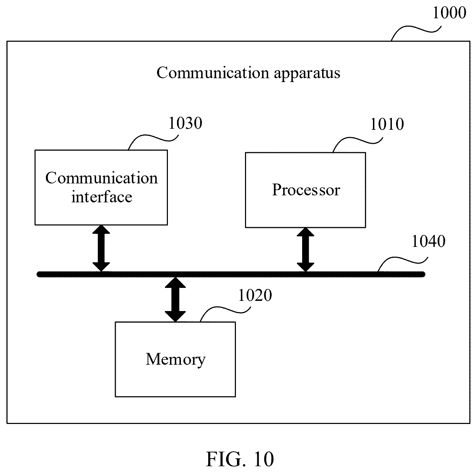

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, only one thick line is used to represent the bus in FIG. 10, but this does not mean that there is only one bus or only one type of bus.

**In** this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

**In** this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be used to carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

**In** a possible implementation, the communication apparatus 1000 may be used in an access network device. Specifically, the communication apparatus 1000 may be the access network device, or may be an apparatus that can support the access network device in implementing functions of the access network device in any one of the foregoing examples. The memory 1020 stores a computer program (or instructions) and/or data for implementing the functions of the access network device in any one of the foregoing examples. The processor 1010 may execute the computer program stored in the memory 1020, to complete the method performed by the access network device in any one of the foregoing examples. When the communication apparatus 1000 is used in an access network device, the communication interface in the communication apparatus 1000 may be configured to interact with a terminal, and send information to the terminal or receive information from the terminal.

**In** another possible implementation, the communication apparatus 1000 may be used in a terminal. Specifically, the communication apparatus 1000 may be a terminal, or may be an apparatus that can support a terminal in implementing functions of the terminal in any one of the foregoing examples. The memory 1020 stores a computer program (or instructions) and/or data for implementing the functions of the terminal in any one of the foregoing examples. The processor 1010 may execute the computer program stored in the memory 1020, to complete the method performed by the terminal in any one of the foregoing examples. When the communication apparatus 1000 is used in the terminal, the communication interface in the communication apparatus 1000 may be configured to interact with an access network device, and send information to the access network device or receive information from the access network device.

The communication apparatus 1000 provided in this example may be used in the access network device to complete the method performed by the access network device, or may be used in the terminal to complete the method performed by the terminal. Therefore, for technical effect that can be obtained by the communication apparatus 1000, refer to the foregoing method examples. Details are not described herein again.

Based on the foregoing example, this application provides a communication system, including an access network device, an SMF, and a PCF. The access network device may implement a function of the access network device in the communication method provided in the example shown in FIG. 4, the SMF may implement a function of the SMF in the communication method provided in the example shown in FIG. 4, and the PCF may implement a function of the PCF in the communication method provided in the example shown in FIG. 4.

This application further provides a communication system, including a first network element and a second network element. The first network element may implement a function of the first network element in the communication method provided in the example shown in FIG. 5, and the second network element may implement a function of the second network element in the communication method provided in the example shown in FIG. 5.

This application further provides a communication system, including a terminal and a first network element. The terminal may implement a function of the terminal in the communication method provided in the example shown in FIG. 8, and the first network element may implement a function of the first network element in the communication method provided in the example shown in FIG. 8.

All or some of the technical solutions provided in this application may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, a terminal, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clearly that, a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A communication method, wherein the method comprises:
determining, by a first access network device, that switching occurs, wherein that switching occurs is that switching from a second access network device to the first access network device is performed; and
sending, by the first access network device, network status information.

2. The method according to claim 1, wherein the network status information indicates at least one of the following: a network congestion degree, whether network congestion occurs, or congestion information.

3. The method according to claim 1 or 2, wherein the network status information is used to trigger determining of a transmission policy based on the network status information.

4. The method according to claim 3, wherein the transmission policy comprises a transmission rate; and
the network status information is used to trigger adjustment of the transmission rate based on the network status information.

5. The method according to any one of claims 1 to 4, wherein sending, by the first access network device, the network status information comprises:
sending, by the first access network device, the network status information when switching starts, during switching, or after switching is completed.

6. The method according to claim 5, wherein sending, by the first access network device, the network status information during switching comprises:
receiving, by the first access network device, an N3 interface end marker, and sending the network status information; or
receiving, by the first access network device, a switching request, and sending the network status information.

7. A communication method, wherein the method comprises:
receiving, by an access network device, configuration information, wherein the configuration information indicates to immediately report network status information or report network status information when a change of an air interface status meets a condition; and
sending, by the access network device, the network status information based on the configuration information.

8. The method according to claim 7, wherein the network status information indicates at least one of the following: a network congestion degree, whether network congestion occurs, or congestion information.

9. The method according to claim 7 or 8, wherein the network status information is used to trigger determining of a transmission policy based on the network status information.

10. The method according to claim 9, wherein the transmission policy comprises a transmission rate; and
the network status information is used to trigger adjustment of the transmission rate based on the network status information.

11. The method according to any one of claims 7 to 10, wherein that the configuration information indicates to immediately report the network status information comprises:
the configuration information comprises configuration information of quality of service monitoring indicating to immediately report the network status information; or
the configuration information of the quality of service monitoring comprises a congestion information parameter indicating to immediately report the network status information; or
the configuration information comprises the configuration information of quality of service monitoring indicating to report the network status information once switching occurs; or
an event-triggered report in the configuration information of the quality of service monitoring comprises a switching event indicating to report the network status information once switching occurs.

12. The method according to any one of claims 7 to 10, wherein the configuration information comprises a first threshold, and that the configuration information indicates to report the network status information when the change of the air interface status meets the condition comprises:
the configuration information indicates to report the network status information when a difference between the to-be-reported network status information and previously reported network status information is greater than or equal to the first threshold.

13. The method according to any one of claims 7 to 12, wherein sending, by the access network device, the network status information based on the configuration information comprises:
sending, by the access network device after determining that switching occurs, the network status information based on the configuration information.

14. The method according to claim 13, wherein determining, by the access network device, that switching occurs comprises:
receiving, by the access network device, an N3 interface end marker, and determining that switching occurs; or
receiving, by the access network device, a switching request, and determining that switching occurs.

15. The method according to any one of claims 7 to 14, wherein sending, by the access network device, the network status information based on the configuration information comprises:
encapsulating, by the access network device, the network status information in a general packet radio service tunneling protocol for a user plane GTP-U header; and
sending, by the access network device, information comprising the GTP-U header to a user plane function network element, so that the user plane function network element sends the information comprising the GTP-U header to an application function network element through at least one of a session management function network element, a policy control function network element, and a network exposure function entity.

16. A communication method, wherein the method comprises:
generating, by a policy control function network element, configuration information, wherein the configuration information indicates to immediately report network status information or report network status information when a change of an air interface status meets a condition; and
sending, by the policy control function network element, the configuration information.

17. The method according to claim 16, wherein the configuration information is comprised in a policy and charging control PCC rule; or
the configuration information is comprised in a quality of service monitoring configuration in the PCC rule.

18. The method according to claim 16 or 17, wherein the network status information indicates at least one of the following: a network congestion degree, whether network congestion occurs, or congestion information.

19. The method according to any one of claims 16 to 18, wherein the network status information is used to trigger determining of a transmission policy based on the network status information.

20. The method according to any one of claims 16 to 19, wherein the transmission policy comprises a transmission rate; and
the network status information is used to trigger adjustment of the transmission rate based on the network status information.

21. The method according to any one of claims 16 to 20, wherein that the configuration information indicates to immediately report the network status information comprises:
the configuration information comprises configuration information of quality of service monitoring indicating to immediately report the network status information; or
the configuration information of the quality of service monitoring comprises a congestion information parameter indicating to immediately report the network status information; or
the configuration information comprises the configuration information of quality of service monitoring indicating to report the network status information once switching occurs; or
an event-triggered report in the configuration information of the quality of service monitoring comprises a switching event indicating to report the network status information once switching occurs.

22. The method according to any one of claims 16 to 20, wherein the configuration information comprises a first threshold, and that the configuration information indicates to report the network status information when the change of the air interface status meets the condition comprises:
the configuration information indicates to report the network status information when a difference between the to-be-reported network status information and previously reported network status information is greater than or equal to the first threshold.

23. A communication method, wherein the method comprises:
determining, by a first network element, that a network status information reporting condition is met; and
sending, by the first network element, network status information to a second network element, wherein the network status information indicates that a network is no longer congested.

24. The method according to claim 23, wherein the network status information indicates a network congestion status, and the network congestion status comprises at least one of the following: the network is no longer congested, a network congestion percentage is 0%, and the network congestion percentage is less than or equal to a first threshold; or
the network status information is a data packet, and the data packet does not comprise a congestion marker.

25. The method according to claim 23 or 24, wherein the network status information reporting condition comprises at least one of the following:
the first network element generates an N3 interface end marker, and sends the network status information;
the first network element receives an N3 interface end marker, and sends the network status information; and
the first network element sends the N3 interface end marker to a source base station, and sends the network status information; wherein
the N3 interface end marker indicates to no longer send data to a source access network device.

26. The method according to any one of claims 23 to 25, wherein sending, by the first network element, the network status information to the second network element comprises:
sending, by the first network element, the network status information to the second network element through at least one of a session management function network element, a policy control function network element, and a network exposure function entity; or sending, by the first network element, the network status information to the second network element through the policy control function network element and/or the network exposure function entity.

27. The method according to claim 26, wherein before the sending, by the first network element, the network status information to the second network element, the method further comprises:
receiving, by the first network element, indication information from a third network element, wherein the indication information indicates the network congestion status.

28. A communication apparatus, wherein the communication apparatus is configured to perform the method according to any one of claims 1 to 27.

29. A communication system, comprising an access network device and a policy control function network element, wherein the access network device is configured to perform the method according to any one of claims 7 to 15, and the policy control function network element is configured to perform the method according to any one of claims 16 to 22.

30. A communication apparatus, comprising a processor, wherein the processor is coupled to a memory, the memory is configured to store instructions, and when the programs or the instructions are executed by the processor, the apparatus is enabled to perform the method according to any one of claims 1 to 27.

31. A computer-readable storage medium, wherein the storage medium stores a computer program or instructions, and when the computer program or the instructions are executed by a communication apparatus, the method according to any one of claims 1 to 27 is implemented.
